# EUROPEAN PATENT APPLICATION

(11) **EP 1 691 178 A1**
(43) Date of publication of application: **16.08.2006**
(21) Application number: 05101019.7
(22) Date of filing: 11.02.2005
(51) Int. Cl.: G01F 23/38

(54) **Magnetic rotation detector for use with a liquid level sensor**

(71) Applicant: SZTEK ANSTALT, 9490 Vaduz LIECHTENSTEIN (LI)
(72) Inventor: Tabellario, Mario, 65122 pescara (IT)
(74) Representative: Quinterno, Giuseppe

(57) **Abstract**

In a system for detecting the level of a liquid in a tank (8), in particular the level of a liquefied petroleum gas (LPG) in a pressurised reservoir (8), use is made of an electronic detector arrangement (15) adapted to provide an output electric analogue signal which is continuously indicative of the angular orientation of the magnetic field generated by magnets carried by a shaft (9) which rotated in response to the oscillations of a float member (12) extending into the tank or reservoir (8).

## Description

The present invention relates to a system for monitoring the level of a liquid in a tank, particularly for monitoring the level of liquid petroleum gas (LPG) in a reservoir.

### Field of the invention

The invention is applicable to systems for monitoring the level of liquids in tanks, and particularly in systems for remotely monitoring LPG reservoirs, for the management and the automatic ordering of re-filling operations.

### State of the art

LPG is stocked in reservoirs which are placed near housing units or utilisation areas. In order to ensure that LPG is continuously available it is necessary to periodically check or monitor the level thereof, and refill the reservoir when the level goes below that of a minimum supply. The orders for reservoir refilling are forwarded to a central store or depot, which attends to delivering the requested LPG by means of tank trucks.

The possibility of remotely monitoring the level of LPG in reservoirs from the central depot would allow to implement an automatic delivery system, eliminating for the users the inconveniences which are bound to the necessity of periodically monitoring the level in a visual manner. In addition, a tele-monitoring system would allow a fuel distributor to operate in a more efficient manner, and with an improved competitive edge. In fact, by knowing when and how much LPG a certain user needs, a distributor could schedule the transportation of LPG for refilling the reservoirs of its clients in the most cost-effective manner.

Until now, the use of tele-monitoring systems has been limited to large fuel-stocking depots, whereas smaller utilising systems, with reservoirs up to 5,000 litres, have not been able to use such systems, because of their excessive costs.

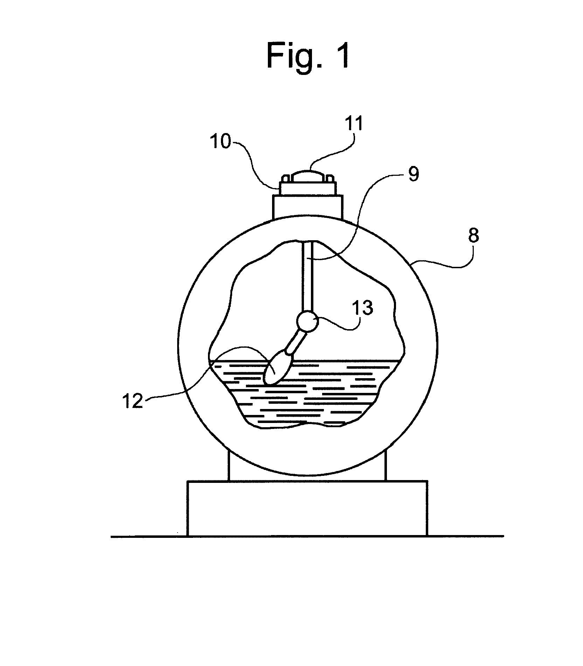

Referring to figure 1 of the enclosed drawings, a typical reservoir 8 for LPG is provided with a mechanical level indicator comprising a base member 10 attached to the reservoir and a removable indicator dial 11 connected to the base by means of screws. The base is in turn screwed to the reservoir, in a sealing manner, since LPG is pressurised, and explosive. The base member includes a mechanism comprising an oscillatable float 12 which, through a gear coupling 13, transforms the level of the LPG in the tank into an angle of rotation of a vertical shaft 9 which extends towards the dial 11, such that the amount of liquid contained in the reservoir or tank is converted into an angle of rotation. The upper end of said vertical shaft forms a head carrying two permanent magnets which interact with magnets of the said removable indicator dial, in such a way that the angular position of an indicator needle of the dial visually indicates the level of LPG contained in the reservoir.

Various attempts have been made until now to replace the visual indicator dial by a sensor arrangement capable of generating and sending a signal indicative of the level of LPG in a reservoir, however it has not been possible to achieve an acceptable degree of accuracy and reliability.

A known kind of sensor uses a photodiode which directs light onto a reflecting surface of a rotating disc coloured with angularly varying shades of grey. This kind of sensor has proved to be unreliable, since it is sensitive to the infrared radiation and its output is, consequently, strongly influenced by the environmental temperature and light.

Another kind of sensor is based on a potentiometer concept, but has problems in maintaining the coupling with the magnets of the said shaft of the mechanical indicator, due to the friction caused by the sliding contacts of the potentiometer. Moreover, the resistive film of the potentiometer is heavily affected by temperature variations.

Another known sensor is based on the Hall effect but is of a switching type, namely of a discrete kind.

In view of the foregoing, an object of the present invention is that of providing a sensor arrangement which allows to transduce in a continuous, analog manner the position of the magnets carried by the said shaft of the mechanical indicator and, consequently, to convert the level of LPG available in a reservoir into a continuous signal.
One further object of the present invention is that of providing a sensor arrangement including a detector of the orientation of a magnetic field, compatible with the characteristics of the mechanical level indicators which are already existing and in use in LPG reservoir.

One further object of the present invention is to provide a system which can be installed in a particularly simple and quick manner.

Still another object of the present invention is that of avoiding the introduction of mechanical moving parts in the arrangement, in order to avoid jamming and wear, ensuring repeatability and reliability of the measurement.

One further object of the present invention is that of permitting a remote reading of the position of the mechanical level indicator, by means of a low-cost, good precision and reliable system.

These and other objects are achieved according to the invention by system defined in the annexed claims.

According to the invention use is made of a detector capable of providing a continuous analog signal indicative of the angular orientation of a moving magnetic field. In the system of the invention such a detector can be coupled to an already installed, conventional mechanical level indicator applied to a reservoir, and can be connected thereto in a completely safe manner, without having to empty the LPG reservoir.

A magnetic field orientation detector allows to detect the orientation, i.e. the direction, of a moving magnetic field, over 360°. The detection is continuous, the output signal is an analogue signal and is a function of the direction of the magnetic field, rather than the strength thereof.

### Brief description of the drawings

Further characteristics and advantages of the invention will become apparent from the detailed description provided by way of non-limiting example, with reference to the accompanying drawings, in which:
figure 1, partly described in the foregoing, is an elevation view, partially broken, showing a LPG reservoir provided with a level indicator system;
figure 2 shows, in top plan view and in cross-sectional views, a detector for use in a level monitoring system according to the present invention; and
figure 3 is a partially exploded perspective view showing the installation of the detector comprised in the system of the invention, on a conventional mechanical level indicator.

### Detailed description

Figure 1 illustrates a reservoir 8 installed outside a housing unit. A mechanical level indicator of the previously described kind is fitted to the reservoir and the base member 10 of the indicator is sealingly coupled to the reservoir by means of screws. Said base member includes a head which carries two magnets, and which is driven by the previously described vertical shaft 9, rotating therewith when a change of the level of the LPG occurs in the reservoir. The indicator dial 11 is placed above the base member 10 of the mechanical indicator and, based on a magnetic coupling, visually indicates the level of the LPG inside the reservoir.

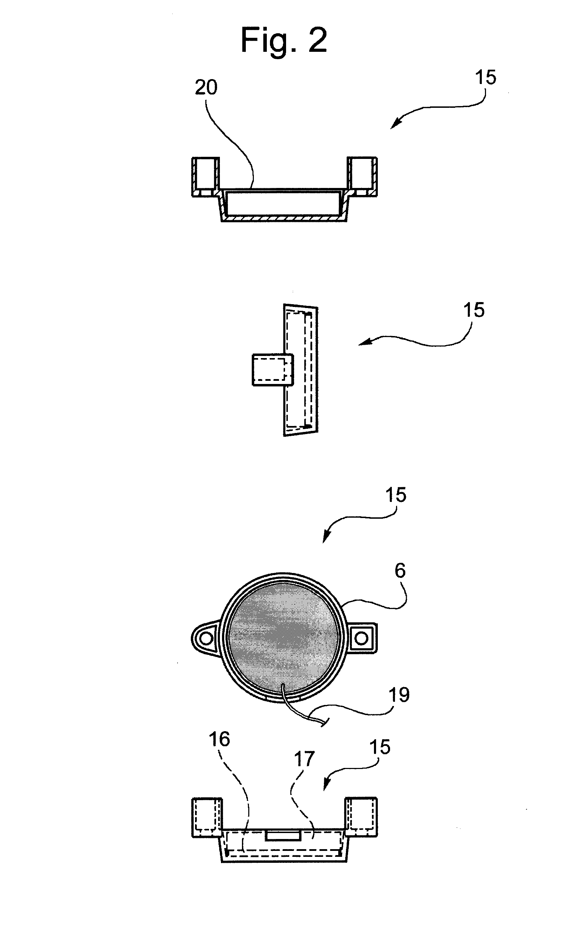

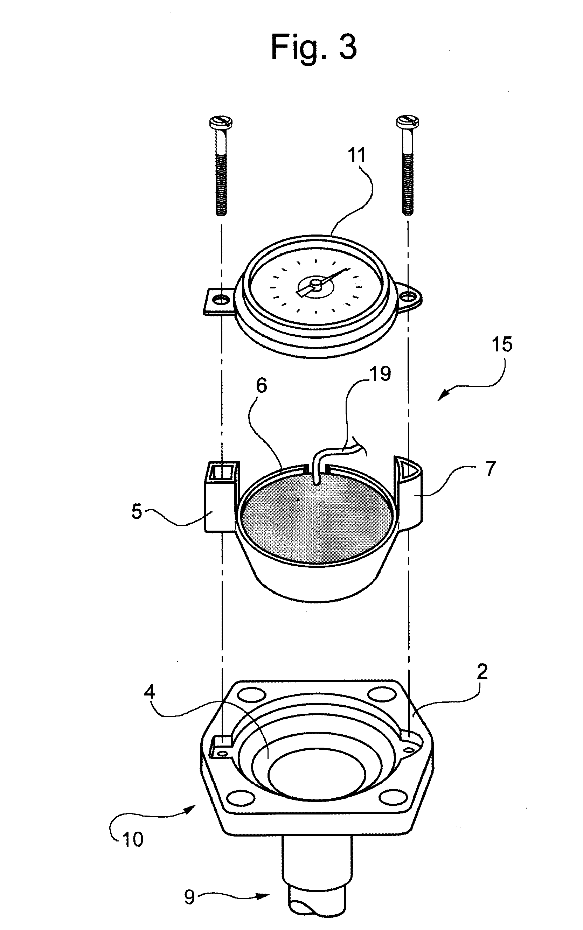

According to the invention, an electronic detector of the orientation of a moving magnetic field is placed between the base member 10 of the mechanical indicator and the indicator dial 11 of the same. Such a detector is shown in figures 2 and 3, wherein it is generally indicated 15.

Referring in particular to figure 2, the detector 15 has no moving parts, and includes an electronic circuit 16, supplied with a very low voltage. Said electronic circuit comprises an arrangement of AMR-type and Hall-effect sensors, and is capable of detecting the orientation of a magnetic field over an angular range of 360°.

With reference to figure 3, the detector 15 in a preferred embodiment comprises a rigid container 6, shaped so as to be insertable in the seat 4 of the base member 10 of a conventional mechanical level indicator, i.e. the seat in which there is normally mounted the indicator dial 11. The container 6 has two diametrically opposed lateral projections 5 and 7, having different shapes, adapted to engage corresponding lateral recesses of the seat 4 in the base member 10 when the detector 15 is disposed in a predetermined relative position with respect thereto. The projections 5 and 7 of the container 6 are adapted to allow the fixation of the indicator dial 11 onto the detector 15, by means of screws or the like, which extend through corresponding threaded holes provided in the base member 10, as it can be easily understood from figure 3.

The installation of the detector 15 onto a conventional mechanical level indicator is extremely simple:
- firstly, the dial indicator 11 is removed from the base member 10;
- the magnetic field orientation detector 15 is properly disposed in the seat 4 of the base member 10; and
- the indicator dial 11 is positioned onto the magnetic field orientation sensor 15 and is fastened to the base member 10 through the usual screws or the like.

In the operation, the magnetic field orientation detector 15 senses the orientation of the magnetic field generated by the magnets carried by the upper head portion of the vertical shaft 9 of the mechanical level indicator. The detector 15 outputs continuous, analogue signals which are processed by a microprocessor, which in turn provides an analogue output signal indicating the orientation of the magnetic field. Said signal can be a varying voltage signal (with a voltage varying for instance between 0 and 2.5 V) or a varying-frequency signal (with a frequency varying for instance between 100 and 3,000 Hz).

The said electronic circuit 16 can operate with a supply voltage of 6-7.5 Vdc and a current of 40 mA. Conveniently, the electronic circuit 16 is totally enveloped by an insulating resin 17 (figure 2) having a dielectric strength of about 25 kV/mm. The containers 6 can be a cup member made with a polyamide material (PA6), with a minimum thickness of about 1.6 mm.

With such characteristics, the surface temperature of the detector 15 is lower than that allowed by temperature class T6, assuming an ambient temperature of 40°C.

The shape and size of the detector 15 are such that it can be easily installed onto already existing mechanical level indicators of LPG reservoirs. The thickness of the detector is such as to allow to maintain the conventional dial indicator 11.

The detector 15 is totally isolated from the external atmosphere, has no moving mechanical parts, and is completely sealed with respect to water or other liquids. Furthermore, it is substantially unaffected by thermal or mechanical shocks, and does not undergo mechanical wear. All these features ensure a proper and a reliable operation through a long life-time.

The information concerning the angular orientation of the magnetic field of the upper portion of the vertical shaft of the conventional level indicator is available either as a low, analogue voltage or as a signal having a variable frequency. That information is adapted to be transmitted to a remote apparatus.

An advantageous feature of the invention is that the provision of the detector 15 allows to monitor in a continuous manner all the variations of level of the LPG in the reservoir, rather than only some discrete levels or thresholds.

In a variant of embodiment, a thin compass with a magnetic needle and a graduated background dial, can be directly mounted on the container 6 of the detector 15, instead of the original indicator dial 11. This variant allows a better accuracy in the visual indication of the level.

## Claims

1. A system for detecting the level of a liquid in a tank, in particular the level of liquefied petroleum gas (LPG) in a pressurised reservoir, comprising a magnetic field orientation sensor or detector without any moving parts.

2. A system according to claim 1, wherein said magnetic field orientation sensor or detector is essentially unaffected by variations of the strength of the magnetic field.

3. A system according to one of the preceding claims, wherein said magnetic field orientation sensor or detector is essentially unaffected by shocks and vibrations.

4. A system according to any of the preceding claims, wherein said magnetic field orientation sensor or detector has an essentially circular shape, with a diameter of for instance 37 mm, with external biasing projections which make it adapted to be used on current mechanical level indicators for LPG reservoirs having a capacity of up to 5,000 litres, between an indicator dial and a base member thereof.

5. A system according to any of the preceding claims, wherein said magnetic field orientation sensor or detector is adapted to be coupled to a dial indicator having a magnetically movable needle.

6. A system according to claims 4 and 5, wherein the magnetic field orientation sensor comprises a container provided with lateral spacer projections having a thickness such as to allow the accommodation of a conventional dial indicator therebetween.

7. A system according to any of the preceding claims, wherein the magnetic field orientation sensor or detector includes an electronic circuit which is totally isolated from the external environment.

8. A system according to any of the preceding claims, wherein the magnetic field orientation sensor includes a container having two internal guides which allow to position an electronic circuit of the sensor or detector only in a predetermined orientation.

9. A system for detecting the level of a liquid in a tank (8), in particular the level of liquefied petroleum gas (LPG) in a pressurised reservoir (8), comprising
an oscillatable float member (12) which extends into the tank or reservoir (8);
a rotatable shaft (9) extending into the tank or reservoir (8) and having one end coupled to the float member (12) through a gear mechanism (13) such that a variation of the level of the said liquid (LPG) causes a corresponding rotation of the said shaft (9); the other end of the shaft (9) extending rotatably in a base member (10) coupled to the tank or reservoir (8) and carrying permanent magnet means generating a magnetic field; and
indicator means (11) which are coupled to the said base member (10) outside the tank or reservoir (8) and are responsive to the said magnetic field for providing an indication of the level of the liquid (LPG) in the tank or reservoir (8);
**characterised in that** said indicator means include an electronic detector arrangement (15, 16) adapted to provide an output electric analogue signal which is continuously indicative of the angular orientation of the said magnetic field in a predetermined plane.
